# EUROPÄISCHE PATENTSCHRIFT

(11) **EP 1 434 492 B1**
(45) Veröffentlichungstag und Bekanntmachung des Hinweises auf die Patenterteilung: **18.06.2008**
(21) Anmeldenummer: 02776782.1
(22) Anmeldetag: 04.10.2002
(51) Int. Cl.: A23G 9/00, A47J 43/28

(54) **PORTIONIERER FÜR LEBENSMITTEL**
PORTIONING DEVICE FOR FOODSTUFFS
PORTIONNEUSE POUR DENREES ALIMENTAIRES

(30) Priorität: 06.10.2001 DE 10149509
(43) Veröffentlichungstag der Anmeldung: 07.07.2004
(73) Patentinhaber: Lölsberg, Bernd, 97273 Kürnach (DE)
(72) Erfinder: SCHÜLLING, Christof, 97522 Sand/Main (DE)
(74) Vertreter: Böck, Bernhard
(86) Internationale Anmeldenummer: PCT/DE2002/003754
(87) Internationale Veröffentlichungsnummer: WO 2003/032745

(56) Entgegenhaltungen:
- EP-A- 0 819 403
- BE-A- 472 274
- BE-A- 1 010 281
- DE-A- 2 364 957
- DE-A- 3 622 034
- DE-U- 8 210 658
- GB-A- 174 821
- GB-A- 1 343 123
- GB-A- 2 313 290
- US-A- 5 000 672

## Beschreibung

Die Erfindung betrifft einen Portionierer für Lebensmittel, insbesondere Speiseeis, mit einem aus zwei Griffhälften bestehenden Griff, die mittels eines Gelenks miteinander verbunden und gegeneinander verschwenkbar sind, einem daran befestigten Löffel, und einem an die Form der Innenseite des Löffels angepaßten Messer, das in geringen Abstand zur Oberfläche des Löffels verschwenkbar angeordnet ist und bei Betätigen des Griffs eine Verschwenkbewegung ausführt.

Portionierer finden in der Gastronomie bei der Portionierung von Speisen Anwendung, insbesondere werden sie zur Formung von kugelförmigen Portionen von Speiseeis genutzt. Dabei wird die Speise bzw. das Eis mit dem Löffel des Portionierers aus dem Vorratsbehälter aufgenommen und anschließend auf einem Teller, einer Schale oder einer Eistüte die zur Kugel geformte Speise abgelegt. Die Freigabe der Speise aus dem Löffel des Portionierers wird durch ein Messer erzielt, das auf der Innenseite des Löffels, eng an dessen Oberfläche anliegend, angebracht ist. Beim Zusammendrücken der beiden Griffhälften wird dieses Messer entlang der Innenseite des Löffels verschwenkt und dadurch die Speise bzw. das Eis aus dem Löffel herausgelöst.

Nach dem Gebrauch des Portionierers erfolgt dessen Reinigung, die häufig darin besteht, daß das Gerät in einem Gefäß mit Wasser abgelegt und ggf. darin hin- und hergeschwenkt wird. Vor einer erneuten Ingebrauchnahme ist es üblich, die am Löffel des Portionierers anhaftenden Tropfen des Spülwassers zu entfernen. Zu diesem Zweck wird der Löffel des Portionierers in der Regel an einem Tuch oder Schwamm abgewischt. Das Abtupfen der Spülwassertropfen erfolgt einerseits aus hygienischen Gründen. Bei der Aufnahme von Speiseeis soll andererseits auch verhindert werden, daß am Löffel anhaftende Wassertropfen zu Eis kristallisieren und dadurch die Konsistenz und den Geschmack des Speiseeises in nachteiliger Weise stören.

Die weit verbreitete Praxis, das am Portionierer anhaftende Spülwasser abzuwischen, entspricht allerdings nur vordergründig einer hygienischen Maßnahme. Denn das am Tuch oder Schwamm abgestreifte Spülwasser bildet zusammen mit Speiseresten eine idealen Nährboden für Bakterien, die auf den Löffel und von dort auf die ausgegebenen Speisen übertragen werden. Aus hygienischen Gesichtspunkten sind die nach dem Stand der Technik ausgebildeten Portionierer sowie deren Verwendungsweise nicht nur höchst bedenklich sondern widerspricht auch den einschlägigen hygienerechtlichen Bestimmungen.

Bei der Bedienung von manuellen Portionierern erfordert das Zusammendrücken der beiden Griffhälften einen gewissen Kraftaufwand. Diese Kraft dient der Überwindung der Rückstellfeder im Griff, der Überwindung der Reibung und dem Herauslösen der im Löffel befindlichen Speise. Dieser Kraftaufwand ist bei gelegentlicher Benutzung des Portionierers erträglich, bei einer permanenten Benutzung führt die monotone Belastung jedoch zu einer erheblichen Beanspruchung von Hand und Arm des Anwenders. Unter diesem Gesichtspunkt ist es daher besonders wichtig, daß die beiden Griffhälften des Portionierers ergonomisch ausgebildet sind. In dieser Hinsicht weisen Portionierer nach dem Stand der Technik häufig jedoch nur unbefriedigende Lösungen auf.

Bei einer Anwendung von manuellen Portionierern besteht ein Problem auch darin, daß die tatsächlich verkaufte Menge an Portionskugeln in der Regel unbekannt ist. Insbesondere bei der Anwendung des Portionierers zum Verkauf von Speiseeis läßt sich bei Verkauf von großen Eismengen an heißen Tagen die Zahl der abgegebenen Speiseeiskugeln nur schätzen. Da im Eisgeschäft Verkäufer und Geschäftsinhaber mitunter nicht die gleiche Person sind, birgt diese Unsicherheit in nachteiliger Weise die Gefahr einer nicht ordnungsgemäßen Abrechnung zwischen Verkäufer und Geschäftsinhaber in sich.

Vor diesem Hintergrund hat sich die Erfindung die Aufgabe gestellt, Portionierer für Lebensmittel, insbesondere Speiseeis dahingehend weiter zu entwickeln, daß die genannten Nachteile vermieden und dessen Handhabung und Effektivität bei der Ausgabe von Portionskugeln verbessert wird. Darüber hinaus umfaßt die Erfindung auch ein Verfahren zur Ausgabe von Portionskugeln.

Erfindungsgemäß wird diese Aufgabe gemäß Anspruch 1 gelöst. Diese sehen hinsichtlich des Portionierers vor, daß
der Griff, vorzugsweise im Bereich des Gelenks, mit einem Puffer aus elastischem Material, vorzugsweise einem Gummiring, ausgestattet ist.

Weiterhin können
Mittel, durch welche die von beiden Griffhälften im Ruhezustand des Portionierers eingenommene Griffweite begrenzbar is vorhanden sein
und/oder
ein Zählwerk, welches die Verschwenkbewegungen der einen gegen die andere Griffhälfte zählt, die zur jeweils vorausgegangenen Verschwenkbewegung einen zeitlichen Abstand größer/gleich einer vorgebbaren Zeitschranke aufweisen

Der Portionierer gemäß Anspruch 1 geht von manuell bedienbaren Portionierern nach dem Stand der Technik aus. In Abweichung zu bekannten Portionierern weist der vorgeschlagene jedoch einen Griff auf, der zwischen Gelenk und Löffel - vorzugsweise im Bereich des Gelenks - mit einem Puffer aus elastischem Material ausgestattet ist. Bevorzugt wird hierbei eine Ausbildung des Puffers durch einen Gummiring, der den Griff im Bereich des Gelenks umschließt und fest mit dem Griff verbunden ist.

Ein Puffer aus elastischem Material wird auch für Portionierer vorgesehen, die in ihrem Aufbau gegenüber dem vorgeschilderten vereinfacht sind, da der Griff einstückig ist, also nicht aus zwei Griffhälften aufgebaut. Dann ist der Löffel unmittelbar an dem einstückigen Griff befestigt. Sie werden nach Art eines Schabers benutzt d.h. der Löffel wird in das Speiseeis eingetaucht und über eine im wesentlichen tangentiale Bewegung geführt und hierbei gefüllt. Auch bei Portionieren dieses Typs ist die Anbringung eines Puffers aus lastischen Material, vorzugsweise eines Gummiringes von Vorteil. Die Art und Weise der Handhabung ist bei beiden Portionieren im Hinblick auf den erfindungsgemäß vorgeschlagenen Puffer aus elastischen Material gleich.

Diese Ausgestaltung des Portionierers ermöglicht eine vorteilhafte Verfahrensweise gemäß vorgeschlagenem Verfahren bei der Ausgabe von Portionskugeln. Danach wird der Portionierer nach Ausgabe der Portionskugeln zunächst in einem mit Wasser gefüllten Behälter abgelegt. Zweck dieser Maßnahme ist eine Reinigung des Portionierers von Speiseresten - insbesondere Resten von Speiseeis. Zu Beginn des nächsten Portioniervorgangs wird der Portionierer vom Verkäufer gegebenenfalls einige Male im Wasser hin- und hergeschwenkt. Nach der Entnahme des Portionierers aus dem Spülwasser wird dieser dann mit dem Puffer aus elastischem Material wiederholt auf einem festen Untergrund aufgeklopft. Hierdurch lösen sich noch anhaftende Tropfen Spülwasser vom Portionierer, so daß er bei der anschließenden Ausgabe von Portionskugel frei von Spülwasser zur Anwendung kommt. Als Untergrund zum Aufklopfen eignet sich im Prinzip jeder feste Untergrund, aus praktischen Erwägungen heraus wird hierfür jedoch die Kante des Spülbeckens zur Ablage des benutzten Portionierers bevorzugt, damit die sich ablösenden Resttropfen in das Spülbecken abtropfen können.

Die weit verbreitete Verfahrensweise bei Portionierern nach dem Stand der Technik, die Reste des Spülwassers durch Abwischen an einem Tuch oder Schwamm zu beseitigen, entfällt bei einem Portionierer gemäß vorliegender Erfindung. Die Gefahr einer Kontamination des Portionierers mit Bakterien ist damit von vorn herein ausgeschlossen. Unter hygienischen Gesichtspunkten bringt die vorgeschlagene Ausbildung des Portionierers somit entscheidende Vorteile mit sich.

Eine weitere Verbesserung bei der Handhabung eines Portionierers wird entsprechend oben genanntem Vorschlag durch Mittel erreicht, welche die von beiden Griffhälften eingenommene Griffweite begrenzen. Die Bedienung eines manuellen Portionierers wird bei Ausgabe von Speiseeis an heißen Tagen zu einem kräftezehrenden Job. Der ständig wiederholte Vorgang, Aufnahme des Speiseeises mit dem Löffel des Portionierers und die Abgabe der Portionskugeln durch Zusammendrücken der beiden Griffhälften, belasten die Finger und Armmuskulatur erheblich.

Zur Verminderung dieser Belastungen ist es erforderlich, den Griff ergonomisch zu gestalten. Die vorgeschlagene Begrenzung der Griffweite stellt eine Maßnahme in diesem Sinne dar. Sie ermöglicht den Portionierer exakt an die individuellen Maße der Hand des Verkäufers anzupassen. Die vorteilhafte Folge hiervon, ist ein weitgehend ermüdungsfreies Arbeiten mit dem Portionierer.

Eine spezielle Ausführungsform eines Portionierers mit begrenzbarer Griffweite sieht vor, den Verschwenkbereich der Griffhälften auf einen Maximalwert zu begrenzen. Ein einfaches Mittel hierzu ist eine geeignet angebrachte Stellschraube, die den genannten Maximalwert festlegt. Griffweite und Handgröße der Bedienperson lassen sich somit auf einander abstimmen.

Bei einer anderen dem gleichen Ziel dienenden Ausführungsform werden Griffhülsen vorgeschlagen, welche auf die Griffhälften aufsetzbar sind. Dabei kann der Anwender zwischen Griffhülsen unterschiedlicher Dicke wählen. Auch hierdurch läßt sich die von der Hand und den Fingern zu umfassende Griffweite variieren, so daß die Belastungen der entsprechenden Muskeln in vorteilhafter Weise verringert wird. Die Verwendung von Griffhülsen unterschiedlicher Dicke lassen sich ausdrücklich anwenden auf Portionierer, deren Griff aus zwei Griffhälften besteht oder aber jene Portionierer, die aus einem einstückigen Griff und einem daran befestigten Löffel aufgebaut sind und nach Art eines Schabers genutzt werden.

Im Sinne der Erfindung ist der Begriff "Griffhülse" weit auszulegen, denn er umfasst neben Hülsen im engeren Sinne als geschlossene Holzylinder auch Schalen, die per definitionem entlang der Längsseite geschlitzt sind. Hülse oder Schale können auf Griff bzw. Griffhälfte aufgeschoben und/oder aufgesteckt werden und erfahren dort eine Fixierung. Schalen können durch Aufdrücken in radialer Richtung bei elastischen Material auch durch ein Aufklipsen d.h. über die Klemmwirkung eine Fixierung erfahren. Die Festlegung kann sowohl bei Schalen als auch Hülsen mit Hilfe von Rasten oder Arretierungen erfolgen.

Die vorgeschlagenen konstruktiven Maßnahmen zur Weiterentwicklung von Portionierern umfassen auch ein Zählwerk zur Bestimmung der ausgegebenen Portionskugeln. Zur Zählung werden gemäß vorliegender Erfindung dabei die Verschwenkbewegungen der einen gegen die andere Griffhälfte beim Zusammendrücken des Griffs genutzt. In der Regel sind hierfür Magnete als Impulsgeber geeignet, wobei jede andere Art der Impulserzeugung ebenfalls für die Erfindung einsetzbar ist.

Um weitestgehend auszuschließen, daß Verschwenkbewegungen gezählt werden, die keine Ausgabe von Portionskugeln zur Folge haben, wie beispielsweise wiederholtes Zusammendrücken des Griffs bei der Abgabe einer fest anhaftenden Portionskugel oder beim Reinigen des Portionierers, ist der vorgeschlagene Zähler gemäß einer Weiterbildung der Erfindung mit einen Zeitschalter gekoppelt. Dieser wird bei jedem Zusammendrücken des Griffs jeweils von neuem gestartet und bewirkt, daß nur solche Griffbewegungen gezählt werden, die zur vorangehenden Griffbewegung einen zeitlichen Mindestabstand aufweisen. Dabei ist diese Zeitschranke durch den Anwender vorgebbar, so daß sich individuelle Arbeitsgewohnheiten berücksichtigen lassen.

Der Zähler in Verbindung mit dem Zeitschalter stellt somit sicher, daß Zählimpulse unterdrückt werden, die in solch kurzen Zeitabständen erfasst werden, innerhalb derer ein Füllen des Löffels und eine Abgabe der Portionskugel nicht möglich ist. Umgekehrt ist die vom Zähler ausgewiesene Zahl damit ein Maß für die verkauften Portionskugeln.

Weiterentwicklungen der Erfindung betreffen die Ausgestaltung des Zählers.

Eine bevorzugte Ausführungsform des Portionierers gemäß vorliegender Erfindung weist ein Zählwerk auf, das die an eine Person verkauften Portionen ermittelt. Die Zählung kann dabei sowohl die Anzahl der Portionen als auch deren Gegenwert in der entsprechenden Landeswährung umfassen. Zur Eingabe des für eine Portionskugel geltenden Verkaufspreises ist das Zählwerk daher erfindungsgemäß mit einer entsprechenden Eingabe ausgestattet. Aufgrund dieser Ausbildung erhält der Verkäufer nach Abschluß des Verkaufsvorgangs die Information sowohl über die Zahl der Portionskugeln als auch deren Preis. Eine andere Ausführungsform weist alternativ oder zusätzlich hierzu die pro Tag verkauften Portionen aus. Auch hierbei kann sowohl die Anzahl der verkauften Portionen als auch deren Preis ausgewiesen werden.

Während die pro Verkaufsvorgang gültigen Zahlen im wesentlichen für den Verkäufer interessant sind, dienen die letzteren Angabe insbesondere der Information des Geschäftsinhabers. Diesem unterschiedlichen Interesse von Verkäufer und Geschäftsinhaber trägt auch die Ausgestaltung der Anzeigen Rechnung.

Zur Wiedergabe der an eine Person verkauften Portionen wird dementsprechend eine vom Verkäufer einschaubare Anzeige vorgeschlagen. Diese Anzeige ist durch Betätigen einer Rückstellvorrichtung, bei der es sich insbesondere um einen Knopf handeln kann, auf Null zurücksetzbar, wobei die Zurücksetzung zweckmäßig immer dann erfolgt, wenn ein auf eine Rechnung laufender Verkaufsvorgang abgeschlossen ist.

Die vom Zählwerk pro Tag ermittelte Anzahl an verkauften Portionen ist hingegen vom Verkäufer nicht einschaubar. Erfindungsgemäß ist zur Ausgabe dieser Zahlen entweder ein aufsteckbares Abfragegerät oder eine mit einer abschließbaren Klappe verdeckbare Anzeige vorgesehen. Beide Varianten stellen sicher, daß nur authorisierte Personen Zugang zu den genannten Verkaufszahlen haben. Wie die Anzeige für die pro Verkaufsvorgang gültigen Zahlen ist auch die Anzeige für den Tagesumsatz per Knopfdruck auf Null zurücksetzbar.

In weiterer Ausgestaltung der Erfindung ist vorgesehen, den Griff des Portionierers mit Mitteln auszustatten, welche die Aufnahme eines Spachtels ermöglichen. Im einfachsten Fall ist hierzu am Griff eine entsprechende Einsteckhülse für den Stiel des Spachtels vorgesehen. Der Spachtels dient dazu, vornehmlich bei Verwendung des Portionierers für Speiseeis, in gewissen Zeitabstände das Eis wieder glatt zu streichen, wenn durch den Löffel des Portionierers die Oberfläche allzu sehr zerklüftet wurde. Insbesondere nach Feierabend ist dieser Vorgang notwendig, um das Speiseeis am Folgetag wieder ansprechend und appetitlich präsentieren zu können.

Es ist zweckmäßig, wenn die Aufnahmevorrichtung für den Spachtel in dem oben beschriebenen Puffer im Bereich des Griffgelenks integriert ist. Prinzipiell kann diese Vorrichtung dabei oberhalb oder unterhalb des Portionierers angebracht sein. Empfohlen wird jedoch eine Anbringung oberhalb des Portionierers, weil hierdurch vermieden wird, daß sich die Aufnahmevorrichtung bei der Entnahme der Portionen mit Speiseeis zusetzt. Nach einem Gebrauch des Spachtels wird dieser, wie der Portionierer, zum Zwecke der Reinigung in dem Behälter mit Wasser abgelegt.

In der Praxis hat es sich als vorteilhaft erwiesen, wenn der Portionierer für Portionen unterschiedlicher Größe einsetzbar ist. Beim vorgeschlagenen Portionierer sind daher konstruktive Maßnahmen vorgesehen, die des ermöglichen, den Löffel abzunehmen und durch einen anderen mit abweichender Größe zu ersetzen. Bei einer einfachen Lösung dieser Aufgabe weist der Löffel des Portionierers einen Vierkant auf, der in eine entsprechende Aufnahme am Griffteil einzustecken und mit einer Schraube festzuziehen ist.

Als Materialien für die Herstellung der vorbeschriebenen Portionierer wird der Zweikomponenten-Spritzguß vorgeschlagen. Er besteht aus einer im innern, also dem zentrumsnahen Bereich befindliche und damit zur Stabilität und Steifigkeit beitragenden harten Komponente und einer außen liegenden weichen Komponente, die mit der Hand in Berührungskontakt tritt und sich anpasst. Eine erheblich Verbesserung des Bedienungskomfort ist die vorteilhafte Folge.

Weitere Einzelheiten, Merkmale und Vorteile der Erfindung lassen sich dem nachfolgenden Teil der Beschreibung entnehmen. In diesem Teil werden Ausführungsbeispiele des erfindungsgemäßen Portionierers anhand einer Zeichnung näher erläutert. Die Figuren zeigen jeweils einen Portionierer mit:
- Figur 1:: einem Zählwerk
- Figur 2:: einem Puffer aus elastischem Material
- Figur 3:: einem angesetzten Spachtel.

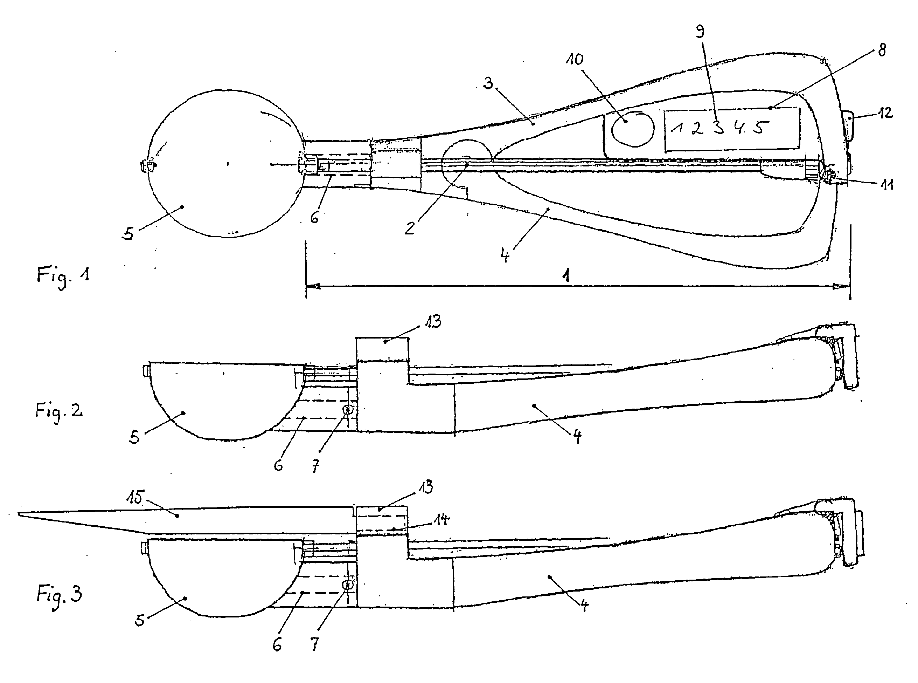

Die Figur 1 läßt den prinzipiellen Aufbau eines manuellen Portionierers erkennen. Er umfaßt einen Griff 1, dar aus zwei im Gelenk 2 verschwenkbar miteinander verbundenen Griffhälften 3, 4 besteht und an seinem einen Ende einen Löffel 5 aufweist. Im vorliegenden Fall ist der Löffel 5 auswechselbar ausgebildet. Er wird mittels eines Vierkantes 6 in eine entsprechende am Griff 1 ausgebildete Buchse eingeschoben und mit der Inbusschraube 7 festgelegt. Bei dem dargestellten Ausführungsbeispiel ist in einer Griffhälfte 3 ein Zähler 8 mit einer Anzeige 9 für die Anzahl der pro Tag verkauften Portionen integriert. Entsprechend ihrer Bestimmung kann die Anzeige 9 mit einer abschließbaren Klappe abgedeckt werden, die bei dem Portionierer in vorliegender Figur abgenommen ist. Das Schloß für die Klappe ist mit dem Bezugszeichen 10 gekennzeichnet. Der Zähler ist mit einem Magneten 11 gekoppelt, der in der anderen Griffhälfte 4 eingelassen ist und immer dann, wenn die Griffhälften 3, 4 gegeneinander verschwenkt werden, einen Zählimpuls erzeugt. Nicht dargestellt ist in vorliegender Figur der Zeitschalter, der mit dem Zähler zusammenwirkt und dabei sicherstellt, daß nur solche Griffbewegungen gezählt werden, die zur vorangehenden Griffbewegung einen zeitlichen Mindestabstand aufweisen. Die Anzeige kann durch Druck auf den Knopf 12 wieder auf Null zurück gesetzt werden.

Figur 2 zeigt die Seitenansicht eines Portionierers mit einem Puffer 13 aus elastischem Material. Der Puffer dient als Geräusch- und Stoßdämpfer beim Aufklopfen des Portinierers nach der Entnahme aus dem Spülwasser. Durch das mehrmalige Aufklopfen auf festem Untergrund, beispielsweise der Spülbeckenkante, lassen sich die an dem Portionierer anhaftende Tropfen Spülwasser wirkungsvoll entfernen. Ein aus hygienischer Sicht zweifelhafter Schwamm zum Abtupfen der Wassertropfen ist damit überflüssig.

Der Puffer 13 weist, wie aus Figur 3 zu erkennen ist, auch eine Hülse 14 zum Einstecken eines Spachtels 15 auf. Der Spachtel wird, insbesondere nach Tagesabschluß, dazu benutzt, die durch permanente Entnahme von Speiseeis zerfurchte Oberfläche des Eises im Vorratsbehälter wieder zu glätten.

Die konstruktiven Maßnahme gemäß vorliegender Erfindung führen im Ergebnis dazu, daß Handhabung und Effektivität eines Portionierers bei der Ausgabe von Portionskugeln wesentlich verbessert werden.

## Patentansprüche

1. Portionierer für Lebensmittel, insbesondere Speiseeis,
- mit einem aus zwei Griffhälften (3, 4) bestehenden Griff (1), die mittels eines Gelenks (2) miteinander verbunden und gegeneinander verschwenkbar sind,
- einem daran befestigten Löffel (5),
- und einem an die Form der Innenseite des Löffels angepaßten Messer,
- das in geringen Abstand zur Oberfläche des Löffels verschwenkbar angeordnet ist
- und bei Betätigen des Griffs eine Verschwenkbewegung ausführt,
**dadurch gekennzeichnet, daß**
- der Griff (1) zwischen Gelenk (2) und Löffel (5) vorzugsweise im Bereich des Gelenks (2), mit einem Puffer (13) aus elastischem Material, vorzugsweise einem Gummiring, ausgestattet ist.

2. Portionierer für Lebensmittel, nach Anspruch 1
**dadurch gekennzeichnet daß** weiterhin
- Mittel vorgesehen sind, durch welche die von beiden Griffhälften (3, 4) im Ruhezustand des Portionierers eingenommene Griffweite begrenzbar ist.

3. Portionierer für Lebensmittel, insbesondere Speiseeis, nach Anspruch 2
**dadurch gekennzeichnet daß**
- der maximale Verschwenkbereich der Griffhälften (3, 4) begrenzbar ist.

4. Portionierer für Lebensmittel, insbesondere Speiseeis, nach einem der vorhergehenden Ansprüche, **dadurch gekennzeichnet daß**
- auf Griff oder Griffhälften (3, 4) Griffhülsen aufsetzbar sind,
- und für die Griffhülsen vorzugsweise unterschiedliche Dicken wählbar sind.

5. Portionierer für Lebensmittel, insbesondere Speiseeis, nach Anspruch 4, **dadurch gekennzeichnet daß** die Griffhülsen von über den Umfang geschlossene Hülsen oder entlang einer Längsseite offen Schalen gebildet sind, die auf Griff bzw. Griffhälfte aufgeschoben und/oder aufgesteckt und/oder aufgeklipst sind und ggf. durch Raste oder Arretierung festgelegt sind.

6. Portionierer für Lebensmittel nach Anspruch 1
**dadurch gekennzeichnet daß** weiterhin
- ein Zählwerk (8) vorgesehen ist,
welches die Verschwenkbewegungen der einen gegen die andere Griffhälfte (3, 4) zählt, wobei insbesondere eine Zählung nur dann erfolgt, wenn sie zur jeweils vorausgegangenen Verschwenkbewegung einen zeitlichen Abstand größer/gleich einer vorgebbaren Zeitschranke aufweisen.

7. Portionierer für Lebensmittel, insbesondere Speiseeis, nach Anspruch 6, **dadurch gekennzeichnet daß**
- das Zählwerk (8) die Zahl und/oder den Währungs-Betrag
- der an eine Person verkauften Portionen,
- und/oder der pro Tag verkauften Portionen
ausweist.

8. Portionierer für Lebensmittel, insbesondere Speiseeis, nach Anspruch 6 oder 7, **dadurch gekennzeichnet daß**
- zur Wiedergabe der an eine Person verkauften Portionen
- eine vom Verkäufer einschaubare
- und per Rückstellvorrichtung, insbesondere einem Knopf (12) auf Null zurücksetzbare Anzeige (9) vorgesehen ist.

9. Portionierer für Lebensmittel, insbesondere Speiseeis, nach Anspruch 6 oder 7, **dadurch gekennzeichnet daß**
- die Anzahl der pro Tag verkauften Portionen
- durch ein aufsteckbares Abfragegerät abfragbar,
- oder durch eine mit einer abschließbaren Klappe verdeckbare Anzeige (9) anzeigbar sind,
- und die Anzeige (9) per Knopfdruck (12) auf Null zurücksetzbar ist.

10. Portionierer für Lebensmittel, insbesondere Speiseeis, nach einem der vorangehenden Ansprüche **gekennzeichnet durch**
- einen am Griff (1) ansteckbaren Spachtel (15).

11. Portionierer für Lebensmittel, insbesondere Speiseeis, nach einem der vorangehenden Ansprüche, **dadurch gekennzeichnet daß**
- der genannte Löffel (5) durch andere Löffel mit unterschiedlicher Größe austauschbar ist.

12. Portionierer für Lebensmittel, insbesondere Speiseeis, nach einem der vorangehenden Ansprüche, **dadurch gekennzeichnet daß** sie aus Zweikomponenten - Spritzguß hergestellt sind, mit der harten Komponente im inneren, zentrumsnahen Bereich und einer außenliegenden weichen Komponente.

## Claims

1. A portioning device for foods, particularly ice cream,
- with a handle (1) in the form of two handle halves (3, 4) that are connected by means of an articulation (2) and can be pivoted relative to one another,
- a scoop (5) that is fixed on the handle, and
- a blade that is adapted to the shape of the inner side of the scoop, wherein
- the blade is arranged in a pivotable fashion close to the surface of the scoop and
- carries out a pivoting movement when the handle is actuated,
**characterized in that**
- the handle (1) is equipped with a buffer (13) of elastic material, preferably a rubber ring, between the articulation (2) and the scoop (5), preferably in the region of the articulation (2).

2. The portioning device for foods according to Claim 1,
**characterized in that**
- furthermore means are provided for limiting the handle width assumed by the two handle halves (3, 4) in the idle state of the portioning device.

3. The portioning device for foods, particularly ice cream, according to Claim 2,
**characterized in that**
- the maximum pivoting range of the handle halves (3, 4) can be limited.

4. The portioning device for foods, particularly ice cream, according to one of the preceding claims,
**characterized in that**
- handle sleeves can be a placed over the handle or handle halves (3, 4), and **in that**
- the user is able to choose from handle sleeves that preferably have a different thickness.

5. The portioning device for foods, particularly ice cream, according to Claim 4,
**characterized in that**
the handle sleeves are realized in the form of peripherally closed sleeves or in the form of shells that are open along one longitudinal side, wherein the sleeves or shells are respectively placed over and/or attached and/or clipped to the handle or handle half and, if so required, fixed thereon by means of a snap-in mechanism or locking mechanism.

6. The portioning device for foods according to Claim 1,
**characterized in that**
- furthermore a counting mechanism (8) is provided that counts the pivoting movements of one handle half relative to the other handle half (3, 4), wherein the counting mechanism only counts a pivoting movement, in particular, if it occurs a certain time interval after the respectively preceding pivoting movement, and wherein this time interval is longer than/identical to a predetermined minimum time.

7. The portioning device for foods, particularly ice cream, according to Claim 6,
**characterized in that**
- the counting mechanism (8) outputs the number and/or the currency amount
- of the servings sold to one person
- and/or of the servings sold per day.

8. The portioning device for foods, particularly ice cream, according to Claim 6 or 7,
**characterized in that**
- a display (9) is provided for outputting the servings sold to one person, wherein said display
- can be viewed by the vendor and
- can be reset to zero by means of a resetting device (9), particularly a button (12).

9. The portioning device for foods, particularly ice cream, according to Claim 6 or 7,
**characterized in that**
- a display (9) is provided for outputting the servings sold per day, wherein the numbers output on said display
- can be retrieved by means of an attachable inquiry device
- or by a display (9) that can be covered with a lockable cover, and wherein
- the display (9) can be reset to zero by pushing a button (12).

10. The portioning device for foods, particularly ice cream, according to one of the preceding claims,
**characterized in that**
- a spatula (15) can be attached to the handle (1).

11. The portioning device for foods, particularly ice cream, according to one of the preceding claims,
**characterized in that**
- the aforementioned scoop (5) can be exchanged with other scoops of a different size.

12. The portioning device for foods, particularly ice cream, according to one of the preceding claims,
**characterized in that**
it is manufactured by means of two-component injection moulding, namely with a hard component in the inner region near the centre and a soft outer component.

## Revendications

1. Portionneuse pour denrées alimentaires, notamment pour de la glace alimentaire,
- comportant une poignée (1) constituée de deux moitiés de poignée (2,4), qui sont reliées l'une à l'autre et basculables l'une par rapport à l'autre au moyen d'un joint articulé (2),
- une cuillère (5) fixée à celle-ci,
- et un couteau adapté à la forme de la face interne de la cuillère,
- lequel est disposé en étant susceptible d'être basculé à une distance réduite de la surface supérieure de la cuillère
- et exécute un mouvement de basculement lors de l'actionnement de la poignée,
**caractérisée en ce que**
- la poignée (1) est équipée entre le joint articulé (2) et la cuillère (5), de préférence au niveau du joint articulé (2), d'un tampon (13) en matériau élastique, de préférence une bague en caoutchouc.

2. Portionneuse pour denrées alimentaires selon la revendication 1, **caractérisée en ce que** par ailleurs
- des moyens sont prévus, au moyen desquels la largeur de prise adoptée par les deux moitiés de poignée (3,4) en l'état de repos de la portionneuse peut être délimitée.

3. Portionneuse pour des denrées alimentaires, notamment pour de la glace alimentaire, selon la revendication 2,
**caractérisée en ce que**
- la zone de basculement maximale des moitiés de poignée (3,4) peut être délimitée.

4. Portionneuse pour denrées alimentaires, notamment pour de la glace alimentaire, selon une des revendications précédentes,
**caractérisée en ce que**
- des douilles de prises peuvent être placées sur la poignée ou les moitiés de poignée (3,4),
- et des épaisseurs différentes peuvent de préférence être choisies pour les douilles de prise.

5. Portionneuse pour denrées alimentaires, notamment pour de la glace alimentaire, selon la revendication 4,
**caractérisée en ce que**
les douilles de prise sont formées par des douilles fermées sur la circonférence ou par des coques ouvertes le long d'un côté longitudinal, qui sont glissées et/ou enfoncées et/ou clipsées sur la poignée, respectivement les moitiés de poignée, et le cas échéant sont fixées en position par encliquetage ou blocage.

6. Portionneuse pour denrées alimentaires selon la revendication 1, **caractérisée en ce que** par ailleurs
- un compteur (8) est prévu, lequel compte les mouvements de basculement des moitiés de poignée (3,4) l'une contre l'autre, moyennant quoi notamment un comptage a lieu, lorsque ils présentent par rapport au mouvement de basculement précédent respectif un intervalle temporel plus grand que/égal à un bloc temporel prescrit.

7. Portionneuse pour denrées alimentaires, notamment pour de la glace alimentaire, selon la revendication 6,
**caractérisée en ce que**
- le compteur (8) présente le nombre et/ou la valeur monétaire
- des portions vendues à une personne,
- et/ou des portions vendues par jour.

8. Portionneuse pour denrées alimentaires, notamment pour de la glace alimentaire, selon la revendication 6 ou 7,
**caractérisée en ce que**
- afin de représenter les portions vendues à une personne
- un écran (9) visible par le vendeur
- et pouvant être remis à zéro par un dispositif de réinitialisation, notamment un bouton (12), est prévu.

9. Portionneuse pour denrées alimentaires, notamment pour de la glace alimentaire, selon la revendication 6 ou 7,
**caractérisée en ce que**
- le nombre des portions vendues par jour
- peut être consulté par un appareil de consultation enfichable,
- ou peut être affiché par un écran (9) susceptible d'être recouvert par un volet d'obturation,
- et l'écran (9) peut être remis à zéro par une pression sur un bouton (12).

10. Portionneuse pour dentées alimentaires, notamment pour de la glace alimentaire, selon une des revendications précédentes,
**caractérisée en ce que**
- une spatule (15) peut être fixée sur la poignée (1).

11. Portionneuse pour denrées alimentaires, notamment pour de la glace alimentaire, selon une des revendications précédentes,
**caractérisée en ce que**
- ladite cuillère (5) peut être remplacée par d'autres cuillères de tailles différentes.

12. Portionneuse pour denrées alimentaires, notamment pour de la glace alimentaire, selon une des revendications précédentes,
**caractérisée en ce que**
- elle est fabriquée par moulage par injection de deux composants, le composant dur étant situé dans la région interne, proche du centre, et un composant mou étant situé à l'extérieur.
